# EUROPEAN PATENT SPECIFICATION

(11) **EP 2 094 779 B1**
(45) Date of publication and mention of the grant of the patent: **28.09.2016**
(21) Application number: 07857424.1
(22) Date of filing: 11.12.2007
(51) Int. Cl.: C08L 3/00, C08L 3/02, C08L 29/04

(54) **BIODEGRADABLE COMPOSITION HAVING HIGH MECHANICAL CHARACTERISTICS**
BIOLOGISCH ABBAUBARE ZUSAMMENSETZUNG MIT HOHEN MECHANISCHEN EIGENSCHAFTEN
COMPOSITION BIODÉGRADABLE À CARACTÉRISTIQUES MÉCANIQUES ÉLEVÉES

(30) Priority: 12.12.2006 IT MI20062375
(43) Date of publication of application: 02.09.2009
(73) Proprietor: NOVAMONT S.p.A., 28100 Novara (IT)
(72) Inventor: BASTIOLI, Catia, 28100 Novara (IT); RALLIS, Angelos, 28100 Novara (IT); LOMBI, Roberto, 28100 Novara (IT)
(74) Representative: Zanoli, Enrico
(86) International application number: PCT/EP2007/063742
(87) International publication number: WO 2008/071717

(56) References cited:
- EP-A- 1 939 247
- EP-A- 1 939 248
- EP-A- 1 942 137
- EP-A- 1 942 139
- EP-A- 1 942 140
- EP-A2- 0 404 723
- WO-A-92/14782
- DATABASE CA CHEMICAL ABSTRACTS SERVICE, COLUMBUS, OHIO, US; XP002429664 retrieved from STN Database accession no. 125:117003 & JP 08 151469 A (NIPPON SYNTHETIC CHEM IND) 11 June 1996 (1996-06-11)
- CINELLI P ET AL: "Properties of injection molded composites containing corn fiber and poly(vinyl alcohol)" J POLYM RES; JOURNAL OF POLYMER RESEARCH APRIL 2006, vol. 13, no. 2, April 2006 (2006-04), pages 107-113, XP002489905

## Description

The present invention relates to a starch based biodegradable composition comprising starch, a polyvinyl alcohol - co-vinyl acetate copolymer and pentaerythritol, which can be produced industrially according to the techniques commonly used for traditional plastics. There is, in recent years, an increasing demand for biodegradable materials with high oxygen barrier properties capable at the same time to maintain high tensile properties and being additionally characterized by an excellent filmability.

The purpose of the present invention is therefore to provide a biodegradable composition having high mechanical properties, particularly high elastic modulus, high load at break and high energy at break associated with the high oxygen barrier property characterizing the polyvinyl alcohol - co-vinyl acetate copolymers and starch.

Such composition is particularly suitable for the production of multilayer packaging products with high oxygen barrier for the packaging of food, pharmaceutical and active molecules in general.

In particular, the present invention relates to a starch based biodegradable composition comprising, on a dry basis with respect to the total weight of the dry composition:
- non converted starch, present in quantity of 15 % - 70% ;
- a polyvinylalcohol-co-vinylacetate copolymer present in quantity of 5 % - 50%;
- plasticizer present in quantity comprised between 5 % and 45 %;
characterized by the fact that said plasticizer contains pentaerythritol in quantity of 45 % - 85 %, with respect to the total weight of the plasticizer, said composition having an elastic modulus comprised between 300 and 2500 MPa, energy at break >1000 kJ/m² and load at break >23 MPa, measured at 23 °C and 55% of relative humidity on a 30-50 micrometers film. Compositions containing starch, polyvinyl alcohol and a plasticizer are known in the in the prior art. The prior art, however, does not describe compositions having the specific starch, polyvinyl alcohol-co-vinylacetate copolymer and plasticizer ratio with the specific pentaerythritol ratio in the plasticizer and with the excellent mechanical properties according to the present invention.

The composition according to the present invention presents excellent rheological characteristics since the specific pentaerythritol ratio improves the composition fluidity. Particularly, at low shear values (such as 70- 250 γₐₚ), the viscosity of the composition is more similar to the viscosity of a composition without pentaerythritol and with just a liquid plasticizer such as glycerol. The composition according to the present invention is therefore easily processable, and particularly filmable, notwithstanding its properties, such as rigidity, which are closer to the ones of a composition with high pentaerythritol content.

The characteristics and advantages of the biodegradable composition according to the invention will emerge clearly from the following description.

As mentioned above, the biodegradable composition according to the present invention comprises starch, a polyvinyl alcohol - polyvinyl acetate copolymer, and pentaerythritol in quantity of 45 - 85% of the total quantity of plasticizer.

With the term "starch" are meant herein all types of non converted starch, with the term "converted" being meant a starch with a much lower average molecular weight than native starch. The conversion process usually involves breaking, rearranging and/or recombining the starch chains through the action of several agents such as e.g. acids.

Non converted starch according to the present invention therefore means starch not in the form of natural fibers (such as corn fibers), particularly: flour, native starch, chemically and/or physically modified starch, desctructurized starch, gelatinized starch, thermoplastic starch and their mixtures. Particularly suitable according to the invention are native potato starch, wheat starch, legume starch, sorghum starch, tapioca, yucca, and maize starch. Native potato and maize starch are particularly preferred.

In the composition according to the invention, the dry starch is present in a quantity comprised between 15 and 70 wt%, preferably between 20 and 60 wt%, more preferably between 25 and 45 wt% with respect to the total of the dry composition.

As regards the polyvinyl alcohol - co-vinyl acetate copolymer, it is present in a quantity comprised between 5 and 50 wt%, preferably between 10 and 48 wt%, more preferably between 20 and 45 wt% with respect to the total of the dry composition.

The polyvinyl alcohol - co-vinyl acetate copolymer has a degree of hydrolysis > 70 %, preferably > 75%, more preferably > 80%. The number average molecular weight of PVOH is of 30.000 - 150.000, preferably of 40.000- 120.000.

The plasticizer of the composition according to the present invention comprises 45-85%, preferably 50-80 % by weight of pentaerythritol.

Said plasticizer is present in an amount of 5 - 45 % by weight of the total dry composition, preferably 10- 40 % and more preferably 15-35 %.

Plasticizers different form pentaerythritol are selected from the group of plasticizers not having carboxyl groups. Particularly, plasticizers different form pentaerythritol are different from compounds having a molecular weight < 2000 and at least one carboxyl group and at least one hydroxyl group. Advantageously, they comprise low molecular weight poly(alkylene glycols), such as poly(ethylene glycols), poly(propylene glycols), poly(ethylenepropylene glycols); polyols, such as glycerol, sorbitol, arabitol, adonitol, xylitol, mannitol, iditol, trimethylolpropane and mixtures thereof. Polyols are preferred.

Glycerine and plasticizers liquid at room temperature and their mixtures are particularly preferred.

Due to the presence of polyvinyl alcohol - polyvinyl acetate copolymer and starch the biodegradable composition according to the present invention has high oxygen barrier properties.

Furthermore, the biodegradable composition described in the present invention has high mechanical properties measured at T = 23°C and 55% of relative humidity on a 30-50 micrometers film, in particular an elastic modulus of 300 - 2500 MPa, preferably 450 - 2000 MPa, an energy at break >1000 kJ/m², preferably >1200 kJ/m², more preferably >1500 kJ/m², and a load at break> 23 MPa , preferably >25 MPa, preferably >30 MPa.

The composition according to the present invention is biodegradable according to the ISO 14851 and ISO 14852 Standard.

Other substances can obviously be added to the present composition such as colorants, aromas, foodstuff integrators, fibres, as well as process additives such as, for example, fluidifying and slipping agents. Particularly noticeable is that the high mechanical properties, the excellent processability and high oxygen barrier properties of the composition according to the present invention are obtained without the addition of hydrogen bond breakers, such as urea. It is of particular interest the use of micro and nanoparticles of cationic or anionic nature such as mortmorillonites and hydrotalcite. They can be used in the ionic form or can be functionalized with chemicals to change the affinity with the composition. The films can also contain particles of silver or titanium oxide in micro and nanodispersions.

The films and sheets of the composition can be also treated superficially with water resistant coatings of silica, siloxanes, aluminum etc. Cold plasma treated surfaces are of particular interest.

The process additives are preferably selected from the group consisting of fatty acids amides (such as erucamide), calcium stearate and zinc stearate and are present in quantities comprised between 0.1 and 5 wt%, preferably between 0.5 and 3 wt% with respect to the total of the dry composition.

The composition according to the present invention is advantageously obtainable by an extrusion process in which the polyvinylalcohol-co-vinylacetate copolymer is not pre-plasticized and wherein the water content at the inlet of the extruder is above 10 %, preferably above 12% more preferably above 15% with respect to the total weight of the composition and the water content is then reduced by degassing at a content <5% with respect to the total weight of the composition.

The biodegradable composition according to the invention is suitable for producing profiles, fibres, and injection-moulded or blow-moulded objects, such as disposable articles, blown films, casting films and sheets for thermoforming.

The composition is particularly suitable for making flexible, and rigid films/sheets.

Due to its properties, the composition according to the present invention has excellent filmability which makes it easy to process also with conventional film machines. The films thus obtained can be further transformed by several technologies such as lamination -on paper, aluminium, biodegradable and non biodegradable plastic films and their combinations to make multilayer packaging products-, extrusion coating and co-extrusion coating - for several application such as metal and paper coating, food and beverage packaging, such as tetrapak® - fibers production, such as composite fibres, microfibres and nanofibers.

Applications particularly suitable are multilayer packaging structures containing:
A layer of coated or uncoated paper or cellulose acetate or cellophane, or biodegradable or non biodegradable plastic, optionally a tie layer or glue, a layer of the composition object of the present invention, optionally a tie layer or a glue and another layer of coated or uncoated paper or cellulose acetate or cellophane, or biodegradable or non biodegradable plastic.

The plastic can be a traditional one such as PE, PP, OPP, PET.

The biodegradable plastics can be polylactic acid (PLA) and its blends, polyhydroxyalcanoates and their blends, starch based materials and their blends, polybuthylene succinate polymer and copolymers and their blends, polybuthylene terephtalate copolymers with adipic acid, dieptanoic acid, dioctanoic acid, azelaic acid, sebacic acid, diundecanoic acid, didodecanoic acid, brassylic acid etc, polyalkylene azelates, polyalkylene sebacates, polyalkylenebrassylates, polyalkylenedidodecanoates, polyalkylenediundecanoates and their combinations.

The multilayer structures can have a symmetric profile with the external layers of the same nature or they can have an asymmetric profile with the two external layers of different nature. Such structures can be particularly suitable in "tetrapack" like packaging, in thermoformed trays, in closers for trays and cups, in containers of different type.

Such containers are used in case of products particularly sensitive to oxidation. Examples can be found in the sector of food and non food products, such as milk, fruit juices, dairy products in general, meat, ham and the like, pharmaceutical products, agricultural products.

Another use can be the one of the slow release of active substances. In such a case the container or sandwich made of the composition and containing the active substance, possibly superficially treated with coating as reported above, can be dissolved in water or a solvent to release the active substance itself.

The biodegradable composition according the present invention is also advantageously suitable for producing injection moulding objects, such as pet toys, needles for grass carpets, cotton buds sticks and toys, with very high mechanical properties also in low relative humidity conditions. In particular, the injection moulded products thus obtained are characterized by an impact energy >80 kJ/m², preferably >100 kJ/m² at 30 % of relative humidity, and >10 kJ/m², preferably >15 kJ/m² at 0% of relative humidity.

The invention will now be described by means of some embodiments provided purely by way of example. In brackets are reported the percentage values of the dry composition.

### EXAMPLE 1

A twin-screw extruder having D = 30 mm, L/D = 40, was supplied with:
- 36,6 (39,1) wt% maize starch (containing 12% of water)
- 30,6 (37,1)wt% PVOH, with a degree of hydrolysis of 88%
- 5,9 (7,1) wt% glycerine
- 13,2 (16) wt% pentaerythritol
- 13,2 wt% water
- 0,5 (0,6) wt% slipping agent

Operating conditions of the extruder:
- thermal profile: 60-120-170x14
- r.p.m. = 170
- active degassing

The material was granulated at the exit of the extruder's die. Granules were obtained that were air cooled.

The water content is 2,5 % with respect to the total weight of the granule.

The granules thus obtained were subsequently blown filmed.

The operating conditions of the film machine, were the following:
Single-screw extruder having D = 19 mm, L/D = 25,
   - film temperature:170 °C
   - film thickness:30-50 µm

### Mechanical characterization

The film thus obtained was subjected to mechanical characterization, in particular to the determination of tensile properties according the ASTM D882 test method. The results appearing in Table 1 were obtained.

### EXAMPLE 2

A twin-screw extruder having D = 30 mm, L/D = 40, was supplied with:
- 30 (31,7) wt% maize starch (containing 12% of water)
- 36 (43,3) wt% PVOH, with a degree of hydrolysis of 88%
- 4,8 (5,8) wt% glycerine
- 15,5 (18,6) wt% pentaerythritol
- 13,2 wt% water
- 0,5 (0,6) wt% slipping agent

Operating conditions of the extruder:
- thermal profile: 60-120-170x14
- r.p.m. = 170
- active degassing

The material was granulated at the exit of the extruder's die. Granules were obtained that were air cooled.

The water content is 2,93 % with respect to the total weight of the granule.

The granules thus obtained were subsequently filmed.

The operating conditions of the film machine, were the following:
Single-screw extruder having D = 19 mm, L/D = 25,
Film temperature: 170°C
Film thickness:30-50 um

### Mechanical characterization

The film thus obtained was subjected to a test of mechanical characterization, in particular to the determination of tensile properties according the ASTM D882 test method. The results appearing in Table 1 were obtained.

### EXAMPLE 3

A twin-screw extruder having D = 30 mm, L/D = 40, was supplied:
- 35,7 (38%) wt% maize starch (containing 12% of water)
- 29,9 (36,1) wt% PVOH, with a degree of hydrolysis of 88%
- 7,9 (9,5) wt% glycerine
- 13 (15,7) wt% pentaerythritol
- 13 wt% water
- 0,5 (0,6) wt% slipping agent

Operating conditions of the extruder:
- thermal profile: 60-120-170x14
- r.p.m. = 170
- active degassing

The material was granulated at the exit of the extruder's die. Granules were obtained that were air cooled.

The water content is 4,4 % with respect to the total weight of the granule.

The granules thus obtained were subsequently filmed.

The operating conditions of the film machine, were the following:
Single-screw extruder having D = 19 mm, L/D = 25,
Film temperature: 170°C
Film thickness:30-50 um

### Mechanical characterization

The film thus obtained was subjected to a mechanical characterization, in particular to the determination of tensile properties according the ASTM D882 test method. The results appearing in Table 1 were obtained.

**Table 1**

| ***Example*** | ***Elastic modulus (MPa)*** | ***Energy at break (kJ*/*m²)*** | ***Load at break* (*MPa*)** |
|---|---|---|---|
| 1 | 1242 | 2863 | 45,2 |
| 2 | 1424 | 2834 | 46,8 |
| 3 | 988 | 2707 | 35,5 |

### EXAMPLE 4

A twin-screw extruder having D = 30 mm, L/D = 35 was supplied with:
- 35.5 (37,71) wt% maize starch (containing 12% of water)
- 29.7 (35,85) wt% PVOH, with a degree of hydrolysis of 88%
- 9.0 (10,86) wt% glycerine
- 12.9 (15,57) wt% pentaerythritol
- 12.9 wt% water

Operating conditions of the extruder:
- thermal profile: 30-90-170 x 8-150 x 4
- flow rate: 10.1 kg/h
- r.p.m. = 170
- active degassing

The material at output from the die was cut from the head of the latter. Granules were obtained that were air cooled.

The granules thus obtained were subsequently supplied to a press for injection moulding.

The operating conditions of the injection press Mod. Sandretto S/7, in which a bone-shaped die was present, were the following:
- thermal profile: 140-150-160-170 °C
- rate of injection: 40 cm³/s

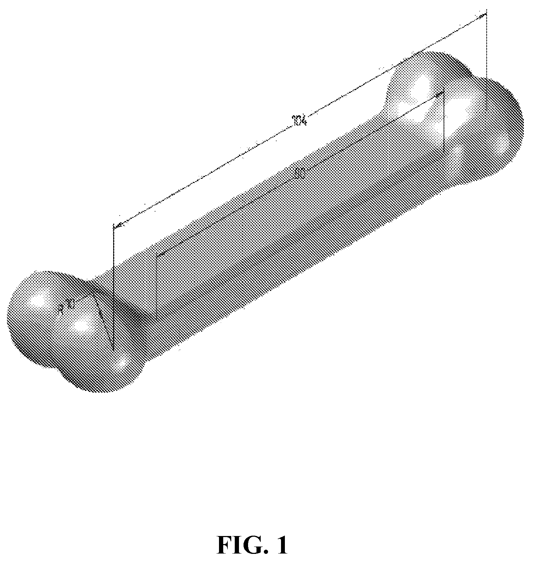

Fig 1 shows the dimensions of the bone obtained in mm.

### Mechanical characterization

The bone thus obtained was subjected to a test of mechanical characterization, in particular an impact test of a Charpy type. The bone had an impact area of 19 mm x 12 mm with curvatures angle of 2 mm in the upper face and of 4 mm in the lower face.

The impact energy was measured at T = 23°C in different conditions of relative humidity, and the results appearing in Table 2 were obtained.

### 4 COMPARISON EXAMPLE

The extruder of Example 1 was supplied with:
- 35.5 (35,36) wt% maize starch (containing 12% of water)
- 29.7 (33,62) wt% PVOH, with a degree of hydrolysis equal to 88%
- 9.0 (10,18) wt% glycerine
- 18.4 (20,82) wt% sorbitol
- 7.4 wt% water

The material was extruded in the same operating conditions as those of Example 1.

The material at output from the die was cut from the head of the latter. Granules were obtained that were air cooled.

The granules thus obtained were subjected to tests of mechanical characterization.

The granules thus obtained were subsequently supplied to the press for injection moulding used for Example 4 and subjected to a moulding cycle in the same operating conditions as those of Example 4.

### The bone obtained had the same dimensions of the Example 4

### Mechanical characterization

The bone thus obtained was subjected to a test of mechanical characterization, in particular an impact test of a Charpy type. The bone had the same impact area of the Example 4. The impact energy was measured at T = 23°C in different conditions of relative humidity, and the results appearing in Table 2 were obtained.

**Table 2**

| ***Example*** | ***Relative humidity %*** | ***Impact energy (kJ*/*m²)*** |
|---|---|---|
| 4 | 30 | 123 |
| 4 Comparison | 30 | 19 |
| 4 | 0 | 20 |
| 4 Comparison | 0 | 6 |

## Claims

1. Biodegradable composition comprising, on a dry basis with respect to the total weight of the composition:
- non converted starch, present in quantity of 15 % - 70% ;
- a polyvinylalcohol-co-vinylacetate copolymer present in quantity of 5 % - 50%;
- plasticizer present in quantity comprised between 5 % and 45 %;
**characterized by** the fact that said plasticizer contains pentaerythritol in quantity of 45 % - 85 %, with respect to the total weight of the plasticizer said composition having elastic modulus comprised between 300 and 2500 MPa, energy at break >1000 kJ/m2 and load at break >23 MPa, measured at 23 °C and 55% of relative humidity on a 30-50 micrometers film, said composition having a water content of less than 5% with respect to the total weight of the composition.

2. Biodegradable composition according to Claim 1, **characterized in that** the non converted starch is present in a quantity of 20 - 60 wt%, the polyvinyl alcohol - co-vinyl acetate copolymer is present in a quantity of 10 - 48 wt% and plasticizer is present in a quantity of 10 - 40 wt % with respect to the total weight of the dry composition.

3. Biodegradable composition according to Claim 2, **characterized in that** the non converted starch is present in a quantity of 25 - 45 wt%, the polyvinyl alcohol - co-vinyl acetate copolymer is present in a quantity of 20 - 45 wt% and plasticizer is present in a quantity of 15 - 35 wt % with respect to the total weight of the dry composition.

4. Biodegradable composition according to any Claim 1-3, **characterized by** the fact that plasticizer contains pentaerythritol in quantity of 50 -80 % with respect to the total weight of the plasticizer said composition having an elastic modulus comprised between 450 and 2000 MPa, an energy at break >1200 kJ/m2 and a load at break >25 MPa measured at 23 °C and 55% of relative humidity on a 30-50 micrometers film.

5. Biodegradable composition according to Claim 4 **characterized by** an energy at break >1500 kJ/m2 and a load at break >30 MPa.

6. Biodegradable composition according to any Claim 1-5, **characterized in that** the polyvinyl alcohol - co-vinyl acetate copolymer has a degree of hydrolysis >75%.

7. Biodegradable composition according to any Claim 1-6 in which plasticizers different from pentaerythritol are different from compounds having a molecular weight < 2000 and at least one carboxyl group and at least one hydroxyl group.

8. Biodegradable composition according to any preceding Claims being obtainable by an extrusion process in which the polyvinylalcohol-co-vinylacetate copolymer is not pre-plasticized and wherein the water content at the inlet of the extruder is above 10 % with respect to the total weight of the composition and the water content is then reduced by degassing at a content lower than 7% with respect to the total weight of the composition.

9. Biodegradable composition according to Claim 8, **characterized in that** the water content at the inlet of the extruder is above 12 % and the water content is reduced by degassing during the extrusion at a content lower than 5% with respect to the total weight of the composition.

10. Profiles, fibres, injection-moulded or blow-moulded objects, such as disposable articles, blown films, casting films and sheets for thermoforming obtained from the biodegradable composition according to any one of the preceding claims.

11. Flexible and rigid films/sheets obtained from the biodegradable composition according to Claim 10.

12. Films obtained from a biodegradable composition according to Claim 10 for application such as lamination -on paper, aluminium, biodegradable and non biodegradable plastic films and their combinations to make multilayer packaging products-, extrusion coating and co-extrusion coating - for several application such as metal and paper coating, food and beverage packaging, such as tetrapak® - fibers production, such as composite fibres, microfibres and nanofibers.

13. Injection moulded articles formed from a polymeric composition according to Claim 10 **characterized by** an impact energy >80 kJ/m² preferably >100 kJ/m² at 23 °C and 30 % of relative humidity and >10 kJ/m² preferably >15 kJ/m² at 0% of relative humidity

14. Pet toys, needles for grass carpets, cotton buds sticks and toys obtained from a biodegradable composition according Claim 13.

15. The composition according to any one of preceding claims biodegradable according to the ISO 14851 and ISO 14852 Standard.

## Patentansprüche

1. Biologisch abbaubare Zusammensetzung, umfassend in der Trockenmasse bezogen auf das Gesamtgewicht der Zusammensetzung:
- nicht-umgewandelte Stärke, die in einer Menge von 15% bis 70% vorliegt;
- ein Polyvinylalkohol-co-Vinylacetat-Copolymer, das in einer Menge von 5% bis 50% vorliegt;
- Weichmacher, die in einer Menge zwischen 5% und 45% vorliegen;
**dadurch gekennzeichnet, dass**
die Weichmacher Pentaerythritol in einer Menge von 45% bis 85%, bezogen auf das Gesamtgewicht der Weichmacher, enthalten,
die Zusammensetzung ein Elastizitätsmodul zwischen 300 und 2.500 MPa, eine Bruchenergie von > 1.000 kJ/m² und eine Bruchlast von > 23 MPa, gemessen bei 23°C und 55% relativer Feuchtigkeit an einem 30- bis 50-µm-Film, aufweist,
die Zusammensetzung einen Wassergehalt von weniger als 5%, bezogen auf das Gesamtgewicht der Zusammensetzung, aufweist.

2. Biologisch abbaubare Zusammensetzung gemäß Anspruch 1, **dadurch gekennzeichnet, dass** bezogen auf das Gesamtgewicht der trockenen Zusammensetzung die nicht-umgewandelte Stärke in einer Menge von 20 bis 60 Gew.% vorliegt, das Polyvinylalkohol-co-Vinylacetat-Copolymer in einer Menge von 10 bis 48 Gew.% vorliegt und die Weichmacher in einer Menge von 10 bis 40 Gew.% vorliegen.

3. Biologisch abbaubare Zusammensetzung gemäß Anspruch 2, **dadurch gekennzeichnet, dass** bezogen auf das Gesamtgewicht der trockenen Zusammensetzung die nicht-umgewandelte Stärke in einer Menge von 25 bis 45 Gew.% vorliegt, das Polyvinylalkohol-co-Vinylacetat-Copolymer in einer Menge von 20 bis 45 Gew.% vorliegt und die Weichmacher in einer Menge von 15 bis 35 Gew.% vorliegen.

4. Biologisch abbaubare Zusammensetzung gemäß einem der Ansprüche 1 bis 3, **dadurch gekennzeichnet, dass** die Weichmacher Pentaerythritol in einer Menge von 50 bis 80%, bezogen auf das Gesamtgewicht der Weichmacher, enthalten, die Zusammensetzung ein Elastizitätsmodul zwischen 450 und 2.000 MPa, eine Bruchenergie von > 1.200 kJ/m² und eine Bruchlast von > 25 MPa, gemessen bei 23°C und 55% relativer Feuchtigkeit an einem 30- bis 50-µm-Film, aufweist.

5. Biologisch abbaubare Zusammensetzung gemäß Anspruch 4, **gekennzeichnet durch** eine Bruchenergie von > 1.500 kJ/m² und eine Bruchlast von > 30 MPa.

6. Biologisch abbaubare Zusammensetzung gemäß einem der Ansprüche 1 bis 5, **dadurch gekennzeichnet, dass** das Polyvinylalkohol-co-Vinylacetat-Copolymer einen Hydrolysegrad von > 75% aufweist.

7. Biologisch abbaubare Zusammensetzung gemäß einem der Ansprüche 1 bis 6, in der die von Pentaerythritol verschiedenen Weichmacher von Verbindungen verschieden sind, die ein Molekulargewicht von < 2.000 und mindestens eine Carboxylgruppe und mindestens eine Hydroxylgruppe aufweisen.

8. Biologisch abbaubare Zusammensetzung gemäß einem der vorangehenden Ansprüche, die durch ein Extrusionsverfahren erhältlich ist, in dem das Polyvinylalkohol-co-Vinylacetat-Copolymer nicht vorplastifiziert wird und wobei der Wassergehalt am Einlass des Extruders über 10%, bezogen auf das Gesamtgewicht der Zusammensetzung, ist und der Wassergehalt dann durch Entgasen auf einen Gehalt niedriger als 7%, bezogen auf das Gesamtgewicht der Zusammensetzung, reduziert wird.

9. Biologisch abbaubare Zusammensetzung gemäß Anspruch 8, **dadurch gekennzeichnet, dass** der Wassergehalt am Einlass des Extruders über 12% ist und der Wassergehalt durch Entgasen während des Extrudierens auf einen Gehalt niedriger als 5%, bezogen auf das Gesamtgewicht der Zusammensetzung, reduziert wird.

10. Profile, Fasern, spritzgegossene oder blasgeformte Gegenstände, wie Wegwerfartikel, Blasfolien, Gießfolien und Folien zum Thermoformen, erhalten aus der biologisch abbaubaren Zusammensetzung gemäß einem der vorangehenden Ansprüche.

11. Flexible und steife Filme/Folien, erhalten aus der biologisch abbaubaren Zusammensetzung gemäß Anspruch 10.

12. Filme, erhalten aus einer biologisch abbaubaren Zusammensetzung gemäß Anspruch 10, zum Aufbringen, wie Laminieren, auf Papier, Aluminium, biologisch abbaubare und nicht-biologisch abbaubare Plastikfilme und deren Kombinationen, um mehrschichtige Verpackungsprodukte herzustellen, Extrusionsbeschichten und Co-Extrusionsbeschichten für verschiedene Anwendungen, wie Metall- und Papierbeschichtung, Nahrungsmittel- und Getränkeverpackungen, wie Tetrapak^{®}, zur Faserherstellung, wie Kompositfasern, Mikrofasern und Nanofasern.

13. Spritzgegossene Artikel, gebildet aus einer polymeren Zusammensetzung gemäß Anspruch 10, **gekennzeichnet durch** eine Schlagenergie von > 80 kJ/m², bevorzugt > 100 kJ/m², bei 23°C und 30% relativer Feuchtigkeit und von > 10 kJ/m², bevorzugt > 15 kJ/m², bei 0% relativer Feuchtigkeit.

14. Spielzeuge für Haustiere, Nadeln für Grasteppiche, Stäbe für Wattestäbchen und Spielzeuge, erhalten aus einer biologisch abbaubaren Zusammensetzung gemäß Anspruch 13.

15. Zusammensetzung gemäß einem der vorangehenden Ansprüche, die gemäß den Standards ISO 14851 und ISO 14852 biologisch abbaubar ist.

## Revendications

1. Composition biodégradable comprenant, sur une base sèche par rapport au poids total de la composition :
- de l'amidon non transformé, présent dans une quantité de 15 % à 70 % ;
- un copolymère de polyalcool de vinyle-co-acétate de vinyle présent dans une quantité de 5 % à 50 % ;
- du plastifiant présent dans une quantité comprise entre 5 % et 45 % ;
**caractérisée par le fait que** ledit plastifiant contient du pentaérythritol dans une quantité de 45 % à 85 %, par rapport au poids total du plastifiant, ladite composition ayant un module d'élasticité compris entre 300 et 2500 MPa, une énergie de rupture > 1000 kJ/m2 et une charge de rupture > 23 MPa, mesurés à 23°C et 55 % d'humidité relative sur un film de 30 à 50 micromètres, ladite composition ayant une teneur en eau inférieure à 5 % par rapport au poids total de la composition.

2. Composition biodégradable selon la revendication 1, **caractérisée en ce que** l'amidon non transformé est présent dans une quantité de 20 à 60 % en poids, le copolymère de polyalcool vinylique-co-acétate de vinyle est présent dans une quantité de 10 à 48 % en poids et le plastifiant est présent dans une quantité de 10 à 40 % en poids par rapport au poids total de la composition sèche.

3. Composition biodégradable selon la revendication 2, **caractérisée en ce que** l'amidon non transformé est présent dans une quantité de 25 à 45 % en poids, le copolymère de polyalcool de vinyle-co-acétate de vinyle est présent dans une quantité de 20 à 45 % en poids et le plastifiant est présent dans une quantité de 15 à 35 % en poids par rapport au poids total de la composition sèche.

4. Composition biodégradable selon l'une quelconque des revendications 1 à 3, **caractérisée par le fait que** le plastifiant contient du pentaérythritol dans une quantité de 50 à 80 % par rapport au poids total du plastifiant, ladite composition ayant un module d'élasticité compris entre 450 et 2000 MPa, une énergie de rupture > 1200 kJ/m2 et une charge de rupture > 25 MPa, mesurés à 23°C et 55 % d'humidité relative sur un film de 30 à 50 micromètres.

5. Composition biodégradable selon la revendication 4, **caractérisée par** une énergie de rupture > 1500 kJ/m2 et une charge de rupture > 30 MPa.

6. Composition biodégradable selon l'une quelconque des revendications 1 à 5, **caractérisée en ce que** le copolymère de polyalcool de vinyle-co-acétate de vinyle a un degré d'hydrolyse > 75 %.

7. Composition biodégradable selon l'une quelconque des revendications 1 à 6 dans laquelle les plastifiants autres que le pentaérythritol sont différents des composés ayant un poids moléculaire < 2000 et au moins un groupe carboxyle et au moins un groupe hydroxyle.

8. Composition biodégradable selon l'une quelconque des revendications précédentes pouvant être obtenue à l'aide d'un procédé d'extrusion dans lequel le copolymère de polyalcool de vinyle-co-acétate de vinyle n'est pas pré-plastifié et dans lequel la teneur en eau à l'entrée de l'extrudeuse est supérieure à 10 % par rapport au poids total de la composition et la teneur en eau est ensuite réduite par dégazage à une teneur inférieure à 7 % par rapport au poids total de la composition.

9. Composition biodégradable selon la revendication 8, **caractérisée en ce que** la teneur en eau à l'entrée de l'extrudeuse est supérieure à 12 % et la teneur en eau est réduite par dégazage au cours de l'extrusion à une teneur inférieure à 5 % par rapport au poids total de la composition.

10. Profilés, fibres, objets moulés par injection ou moulés par soufflage, tels que des articles jetables, films soufflés, films coulés et feuilles de thermoformage obtenus à partir de la composition biodégradable selon l'une quelconque des revendications précédentes.

11. Films/feuilles flexibles et rigides obtenu(e)s à partir de la composition biodégradable selon la revendication 10.

12. Films obtenus à partir d'une composition biodégradable selon la revendication 10 pour une application telle qu'une stratification sur papier, aluminium, films plastiques biodégradables et non biodégradables et leurs combinaisons pour fabriquer des produits d'emballage multicouche, un revêtement par extrusion et un revêtement par coextrusion - pour plusieurs applications telles que revêtement métallique et couchage de papier, emballage alimentaire et pour boissons, tels que tetrapak® - une production de fibres, telles que des fibres composites, microfibres et nanofibres.

13. Articles moulés par injection fabriqués à partir d'une composition polymère selon la revendication 10 **caractérisés par** une énergie de rupture > 80 kJ/m², de préférence > 100 kJ/m² à 23°C et 30 % d'humidité relative et > 10 kJ/m², de préférence > 15 kJ/m² à 0 % d'humidité relative.

14. Jouets pour animaux de compagnie, aiguilles pour tapis de gazon, cotons-tiges et jouets obtenus à partir d'une composition biodégradable selon la revendication 13.

15. Composition selon l'une quelconque des revendications précédentes, biodégradable selon la norme ISO 14851 et ISO 14852.
